Europäisches Patentamt

European Patent Office

Office européen des brevets

(11) Veröffentlichungsnummer: **0 320 715**
**A2**

# (12) EUROPÄISCHE PATENTANMELDUNG

(21) Anmeldenummer: 88120128.9

(51) Int. Cl.⁴: **D03D 11/00 , B29C 67/00**

(22) Anmeldetag: 02.12.88

(30) Priorität: 15.12.87 DE 3742400

(43) Veröffentlichungstag der Anmeldung:
**21.06.89 Patentblatt 89/25**

(84) Benannte Vertragsstaaten:
**BE DE ES FR GB IT NL**

(71) Anmelder: **MEHLER VARIO SYSTEM GmbH**
**Edelzeller Strasse 53**
**D-6400 Fulda(DE)**

(72) Erfinder: **Schwan, Rüdiger, Dr. Dipl.-Ing.**
**Bronzeller Strasse 10**
**D-6400 Fulda(DE)**

(74) Vertreter: **Görtz, Dr. Fuchs, Dr. Luderschmidt**
**Patentanwälte**
**Sonnenberger Strasse 100 Postfach 26 26**
**D-6200 Wiesbaden(DE)**

(54) **Verfahren zur Herstellung eines Sandwich-Leichtbaustoffs.**

(57) Bei den bekannten Verfahren muß das Doppelgewebe zusätzlich mit einem wärmehärtenden Kunstharz imprägniert werden, um die gewünschte Stabilität zu erhalten. Das neue Verfahren soll demgegenüber einfacher und schneller sein.

Bei dem erfindungsgemäßen Verfahren wird das Doppelgewebe aus Fasern oder Garnen gefertigt, die aus mindestens einem unter Wärme sich verfestigenden Polymeren bestehen. Das Doppelgewebe wird anschließend einer Temperaturbehandlung unterworfen, so daß sich das Gewebe verfestigt.

Der so hergestellte Sandwich-Leichtbaustoff kann überall dort eingesetzt werden, wo es auf geringes Gewicht und große mechanische Stabilität ankommt, vorzugsweise im Flugzeugbau.

EP 0 320 715 A2

Verfahren zur Herstellung eines Sandwich-Leichtbaustoffs

Die Erfindung betrifft ein Verfahren zur Herstellung eines Sandwich-Leichtbaustoffs.

Leichtbaustoffe werden überall dort eingesetzt, wo es auf eine werkstoffsparende Gestaltung, also auf geringes Gewicht ankommt. Daher werden Leichtbaustoffe vorwiegend im Flugzeug- oder Fahrzeugbau aber auch in der Bautechnik verwendet.

Neben der Gewichtseinsparung ist jedoch die mechanische Stabilität, d.h. die Festigkeit, Belastbarkeit und die Verwindungssteifigkeit eine weitere wesentliche Forderung, die an die Leichtbaustoffe gestellt wird.

Die erforderliche mechanische Stabilität wird durch die sog. Sandwich-Bauweise erreicht, bei der zwei dünne, tragende Deckschichten verwendet werden, die über ein dickeres aber leichteres Kernmaterial miteinander verbunden sind.

Je nach Anwendungsgebiet bestehen diese Deckschichten aus Metall, Sperrholz oder faserverstärkten, synthetischen Werkstoffen; als Füllstoffe werden Hartschäume, Balsaholz oder Wabenkerne aus den verschiedensten Materialien sowie Filigranwerkstoffe mit Netzstruktur eingesetzt. Diese Waben- bzw. Netzstruktur wird aus mit Kunstharz imprägnierten Kettgewirken durch Tiefziehen hergestellt.

Es ist weiterhin bekannt, nicht gewebte Vlies- oder Nadelfilze mit hohem Porenvolumen als Kernmaterial zu verwenden.

Durch diese Bauweise können gewichtsbezogene Festigkeiten erreicht werden, die die Werte von Stahl um ein Vielfaches übersteigen.

Allerdings erfüllen diese Konstruktionen nicht immer alle Anforderungen hinsichtlich Brandverhalten, Verformbarkeit, Festigkeit und toxischem Verhalten.

Ein weiterer Nachteil besteht darin, daß das Kernmaterial mit den Deckschichten verbunden werden muß, z.B. durch Kleben, so daß bei der Herstellung des Sandwich-Bauteils ein zusätzlicher Arbeitsgang erforderlich ist. Durch die Art der Verbindung von Kernmaterial und Deckschichten wird außerdem die mechanische Stabilität des gesamten Bauteils maßgebend beeinflußt, so daß oft gerade hinsichtlich der Verwindungssteifigkeit die Anforderungen nicht erfüllt werden können.

Dies ist insbesondere dann der Fall, wenn eine Wabenstruktur als Kernmaterial verwendet wird, das als Bindungsfläche lediglich die dünnen Stege der senkrecht zur Deckschicht stehenden Wabenwände aufweist.

Aus der US-PS 4,336,296 ist ein dreidimensionales Gewebe bekannt, das zur Erhöhung der Stabilität in eine Kunststoffmasse getaucht wird, die die Aufgabe hat die einzelnen Fäden miteinander zu verkleben. Auf diese Weise wird eine flexible Struktur erzielt, die für die Herstellung von Kraftfahrzeugreifen verwendet wird. Als Leichtbaustoff ist dieses Gewebe nicht einsetzbar.

Aus der GB-PS 990,554 ist ein zweilagiges Gewebe bekannt, bei dem die beiden Lagen über Polfäden miteinander verbunden sind. Um beispielsweise stabile Platten zu erhalten, werden diese Doppelgewebe mit einem wärmehärtenden Kunstharz imprägniert, der bei einer anschließenden Wärmebehandlung aushärtet. Nachteilig hierbei ist der zusätzliche Arbeitsgang des Imprägnierens.

In der US-PS 3,670,504 wird ein Doppelgewebe aus Polymeren beschrieben, bei dem die Polfäden einen derart großen Abstand zueinander aufweisen, daß das Doppelgewebe mit Beton ausgefüllt werden kann. Das Gewebe erhält seine Stabilität erst durch den Füllstoff.

Aus der US-PS 3,207,185 sind aus einem Doppelgewebe bestehende Platten bekannt, bei denen auch die Verbindung zwischen dem oberen und unteren Gewebe nicht aus durchgehenden einzelnen Fäden besteht, sondern aus dem gleichen Gewebe wie die Deckschichten. Zur Herstellung sind daher Spezialmaschinen notwendig. Zur Verfestigung des aus Polymeren gefertigten Gewebes wird dieses ebenfalls mit einem Kunstharz imprägniert, der anschließend in einer Wärmebehandlung aushärtet.

Aufgabe der Erfindung ist daher ein Verfahren zur Herstellung eines Sandwich-Leichtbaustoffs, das einfacher, schneller und kostengünstiger als die bekannten Verfahren durchführbar ist, wobei der erhaltene Leichtbaustoff mindestens die gleichen Werte hinsichtlich Festigkeit, Steifigkeit, Verwindungssteifigkeit, Dichte und Brandverhalten aufweisen soll wie die bekannten Sandwich-Baustoffe.

Diese Aufgabe wird durch ein Verfahren gelöst, bei dem das Doppelgewebe aus Fasern oder Garnen gefertigt wird, die aus mindestens einem unter Wärme sich verfestigenden Polymeren bestehen, und bei dem das Doppelgewebe einer Temperaturnachbehandlung derart unterworfen wird, da sich das Gewebe verfestigt. Dieses Verfahren hat den Vorteil, daß der zusätzliche Verfahrensschritt des Imprägnierens mit einem wärmehärtbaren Kunstharz wegfällt, wodurch das Herstellungsverfahren wesentlich verkürzt wird. Zur Erzielung bestimmter, dem jeweiligen Verwendungszweck angepaßter Endprodukteigenschaften werden vorzugsweise Fasertypen verwendet, die sich durch bestimmte Glasumwandlungstemperaturen und Schmelz- bzw. Zersetzungstemperaturen auszeichnen.

Vorzugsweise werden Fasern ohne Schmelzpunkt und nicht ausgeprägter Zweiphasenstruktur eingesetzt. Es sind alle Polymeren geeignet, die sich zu Fasern bzw. Garnen verarbeiten lassen, d.h. Polykondensat- und Polyadditionsprodukte, wie Polyester oder Polyamide, oder Polymerisate, wie Polypropylen, Polyacrylnitril oder Polytetrafluoräthylen.

Soll der Baustoff in brandgefährdeten Bereichen zum Einsatz kommen, sind hochtemperaturbeständige Polymere geeignet. Hierzu zählen homocyclische und heterocyclische Polymere, insbesondere vollaromatische Polyamide (Aramide), vollaromatische Polyamide und "geordnete Polyamide" (Copolyamide), Heterocyclen enthaltende aromatische Polyamide, heterocyclische Polyamide mit geordnetem Aufbau, Polymere aus leichtlöslichen heterocyclischen Polyamiden, Fasern aus Polyheterocyclen, Polyimide, Polyimidamide, Polybenzimidazole, Polyphenylquinoxaline, Polyacrylenether, Polyoxydiazole, Polytriazole, Polythiadiazole, Polybenzoxazole und Polychinazolindione.
Weiterhin kann das Doppelgewebe Leiterpolymere, insbesondere Poly- bis - benzimidazolbenzophenanthrolin oder andere hochtemperaturbeständige Polymere wie Polytherephtaloyl - oxalamidrazon, Poly - 2,6 - diphenyl - p - phenylenoxyd oder Phenol-Formaldehyd aufweisen.

Gemäß einer weiteren Ausführungsform können zusätzlich zu den Polymerfasern auch anorganische Fasern, wie Mineralfasern, Kohlenstoffasern, polykristalline, anorganische Fasern, Whisker oder Metallfasern eingewebt werden. Ein mit derartigen anorganischen Fasern versehener Sandwich-Leichtbaustoff ist insbesondere für die Neufertigung und Umrüstung bei zukünftigen Inspektionen von Flugzeugen vorteilhaft, da in Zukunft die bisher für die Seitenverkleidung, Wandverkleidung, Deckenplatten, textilbespannten Teile, wie Fußleisten und Trennwände sowie Ablageklappen und Luftversorgungsleitungen verwendeten Thermoplaste durch Leichtbaustoffe ersetzt werden müssen, die dem von der Ohio-State-University entwickelten Hitzetest Heat Release Test (Test Nr. 14 CFR, Teil 25 und 121, Nr. 24595, Nr. 25-61 und 121-189) bestehen müssen.

Eine erfindungsgemäße Sandwichplatte aus Polyimidfasern mit anorganischem Faseranteil mit den Abmessungen 150 x 150 mm wurde entsprechend den Testvorschriften in einer Heizkammer durch eine Wärmequelle mit einer Leistung von 3,5 W/cm² fünf Minuten lang bestrahlt. Am Heizkammerausgang wurden Werte von ≤ 65 kW/m² gemessen, womit die Testanforderungen erfüllt sind.

Gemäß einer weiteren Ausführungsform werden Polymerfasern bzw. Polymergarne mit hohem Elastizitätsmodul verwendet.
Hierzu kommen folgende Polymere in Frage:
Poly - p - benzamid, Poly - p - phenylenterephtalamid, aromatisches Polyamidhydrazid, Polyäthylennaphthalat, Polyäthylendiphenoxydicarboxylat und Polyphenylensulfid.

Bei den aufgeführten teilkristallinen Synthesefasern, die aus Homopolymerisaten hergestellt sind, wird durch die spezielle Spinn-, Verstreckungs- und Nachbehandlungstechnologie eine physikalisch modifizierte Form erreicht, die deren Einsatz in dem Leichtbaustoff ermöglicht.

Es können auch chemisch modifizierte Fasern zum Einsatz kommen, wenn Copolymerisate mit verminderter Kristallisationsbereitschaft oder vorzugsweise amorphe Fasern verwendet werden, die auch nach der dem jeweiligen Polymer entsprechenden Temperatur behandelt worden sind, weiterhin amorphe Struktur behalten.

Für besondere Anwendungsfälle können in dem Doppelgewebe auch Harze eingelagert werden.

Der Sandwich-Leichtbaustoff kann auch die unterschiedlichsten Kombinationen der genannten Polymerfasern bzw. Polymergarne aufweisen. Das Gewebe kann zusätzlich durch Kunststoffanlagerung oder Imprägnierung stabilisiert werden.

Erfindungsgemäß liegen die Einzelfaserdurchmesser vorzugsweise zwischen 1 und 1000 μm, die Feinheit der verwendeten Garne liegt vorzugsweise zwischen 10 dtex und 2200 dtex.

Eine zusätzliche Laminierung mit weiteren Deckfolien kann in den meisten Fällen aufgrund der ansprechenden, weitgehend variablen Deckflächenkonstruktion bereits bei der Herstellung entfallen. Ein weiterer Vorteil besteht bei dem Leichtbaustoff darin, daß dieser an die konstruktiven Erfordernisse der Bauteilfertigung angepaßt werden kann. Der Leichtbaustoff kann beliebig bearbeitet und umgestaltet werden, obwohl er ein multiorientiertes Gefüge aufweist. Dies bedeutet, daß eine in weiten Grenzen variable Konstruktion möglich ist, bei der die Anisotropie der mechanischen und physikalischen Eigenschaften gezielt in die Konstruktion unter Berücksichtigung möglicher chemischer Reaktionen im Stoff oder mit anderen Werkstoffen oder auch mit der Atmosphäre einbezogen werden kann.

Der Leichtbaustoff ist je nach Art der verwendeten Fasern oder Garnen außerdem gas-, wasserdampf- oder flüssigkeitsdurchlässig. Damit ergeben sich vollkommen neue Anwendungsgebiete.

Gemäß einer bevorzugten Ausführungsform der Erfindung wird das dreidimensionale Doppelgewebe mit Ein-, Zwei-oder Dreischußbindung hergestellt.

Die entsprechenden Webstühle zur Herstellung solcher Doppelgewebe sind für die Aufnahme von fünf oder sechs Ketten, für je eine Grund- und Bindekette für Ober- und Unterware und bei Ein- und Zweischußware für eine Polkette sowie bei Dreischußware für zwei Polketten eingerichtet.

Die Webschützen schlagen eine Balkenanschlagvorrichtung entweder in Gleichschlag oder in Kreuzschlag durch das Doppelfach.

Die zwei Grundgewebe (Ober- und Unterware), die ohne die Verwendung von Ruten hergestellt werden können, werden mit einem dem jeweiligen späteren Einsatzzweck entsprechenden Abstand übereinandergewebt. Diese Grundgewebe werden durch Polkettenfäden verbunden, die hinsichtlich Dichte und Länge variabel gewählt werden können. Die Polkettenfäden werden entweder durch Schäfte oder durch Spezialmaschinen von einem Grundgewebe in das andere geführt und durch Schußverkreuzung eingebunden. Die beiden Grundgewebe bilden später nach Verfestigung durch mechanischen, thermischen oder chemischen Einfluß die beiden Deckkonstruktionen des Leichtbau-Sandwichs.

Die Polketten übernehmen im Sandwich die Stabilität in der dritten Dimension. Dadurch werden maximale mechanische Eigenschaften bei minimaler Dichte, die eine der Hauptanforderung ist, die an Verstärkungskonstruktionen gestellt werden, erreicht.

Gemäß einer bevorzugten Ausführungsform wird das Doppelgewebe nach dem Veloursverfahren hergestellt.

Die Temperaturnachbehandlung des fertigen Doppelgewebes, durch die die Verfestigung des Gewebes erfolgt, und bei Temperaturen oberhalb der Glastemperatur $T_G$ des amorphen Materials des oder der Polymeren durchgeführt. Die Dauer dieser Temperaturnachbehandlung richtet sich ebenfalls nach dem eingesetzten Polymermaterial.

Gemäß einer weiteren Ausführungsform wird das Doppelgewebe von dieser Temperaturnachbehandlung, zunächst bei Temperaturen unterhalb der Glastemperatur $T_G$ des amorphen Materials des oder der Polymeren vorgetempert. Auch hier richtet sich Temperatur und Dauer des Vortemperns nach den verwendeten Polymerfasern oder Polymergarnen.

Je nach Art des verwendeten Polymeren wird zur Verfestigung des Gewebes dieses vor der Temperaturbehandlung in Längs- und Querrichtung verstreckt und während der Temperaturnachbehandlung oberhalb des Glasumwandlungspunktes der verwendeten Fasern oder Garne wird das Gewebe schrumpfen gelassen.

Nach Abschluß oder während dieses Vortemperns und dieser Temperaturnachbehandlung kann das Gewebe noch zusätzlich imprägniert oder auf andere Weise chemisch behandelt werden.

Je nach Verwendungszweck wird das vorverfestigte oder fertige und nachbehandelte Gewebe entweder in Platten geschnitten oder in entsprechende Formteile gepreßt. Wenn das Doppelgewebe nach dem Vortempern in Formteile gepreßt wird, so fällt die Temperaturnachbehandlung im wesentlichen mit dem Preßvorgang zusammen.

Für das Pressen von Sandwich-Leichtbaustoff-Formteilen aus Copolyimidfasern werden z.B. Temperaturen bis 400°C, vorzugsweise 335°C eingesetzt. Der Preßvorgang dauert ca. 90 Minuten und wird bei einem Druck von 0,2 bar durchgeführt.

Alle Parameter wie Temperatur, Zeit und Druck stehen in einer werkstoffeigenen produktspezifischen Abhängigkeit voneinander. Der fertige Leichtbaustoff weist eine Dicke von ca. 2,5 mm bis 70 mm auf. Es können jedoch auch andere Dicken hergestellt werden.

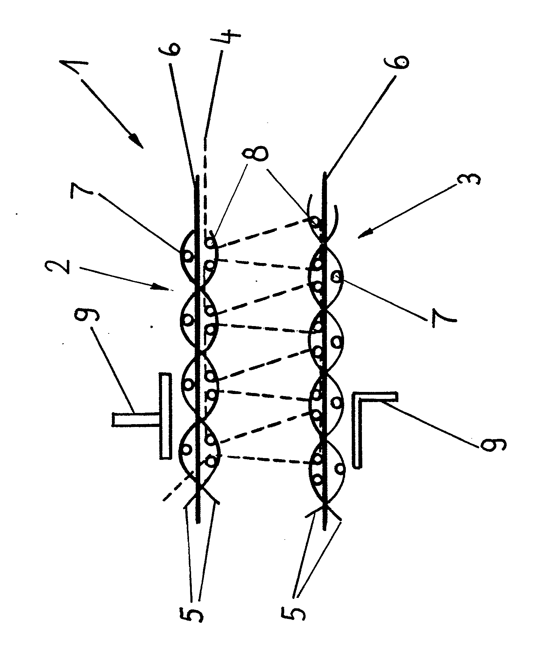

Die Figur zeigt die Herstellung des erfindungsgemäßen Doppelgewebes 1, das sich zwischen den Florschienen 9 befindet, die die Dicke des Doppelgewebes definieren. Die Oberware 2 und die Unterware 3 werden durch die Grundketten 6 und die Bindeketten 5 sowie die Unterschüsse 7 und die Oberschüsse 8 gebildet. Die Polkettfäden, die das Kernmaterial bilden, sind mit 4 bezeichnet.

Der Leichtbaustoff kann je nach Anwendungsart als Bahnenware, Zuschnitt oder Formteil vorgetempert oder voll ausgeschrumpft und verfestigt hergestellt werden, was ein zusätzlicher Vorteil gegenüber den bekannten Leichtbaustoffen darstellt. Das Herstellungsverfahren bringt auch weitere Vorteile hinsichtlich der Weiterverarbeitung und der Qualität der Sandwich-Bauteile, denn die beim Verpressen der Deckschichten nach dem Stand der Technik normalerweise entstehenden Gase werden nicht im Sandwich eingeschlossen, sondern abgeleitet. Dadurch, daß bis auf besondere Anwendungsfälle keine Harze zur Versteifung der Leichtbaukonstruktion verwendet werden müssen, wird die Gasbildung auf ein Minimum reduziert.

## Ansprüche

1. Verfahren zur Herstellung eines Sandwich-Leichtbaustoffs, bei dem ein Doppelgewebe hergestellt wird, dessen Ober- und Unterware die Deckschichten und dessen die Ober- und Unterware verbindenden Polfäden das Kernmaterial bilden, dadurch gekennzeichnet, daß das Doppelgewebe aus Fasern oder Garnen gefertigt wird, die aus mindestens einem unter Wärme sich verfertigenden Polymeren bestehen, und daß dieses Doppelgewebe einer Temperaturnachbehandlung derart unterworfen wird, daß sich das Gewebe verfestigt.

2. Verfahren nach Anspruch 1, dadurch gekennzeichnet, daß das Doppelgewebe nach dem Veloursverfahren hergestellt wird.

3. Verfahren nach Anspruch 1 oder 2, dadurch gekennzeichnet, daß das Doppelgewebe mit Ein-, Zwei- oder Dreischußbindung hergestellt wird.

4. Verfahren nach einem der Ansprüche 1 bis 3, dadurch gekennzeichnet, daß ein hochtemperaturbeständiges Polymeres verwendet wird.

5. Verfahren nach Anspruch 4, dadurch gekennzeichnet, daß als hochtemperaturbeständiges Polymeres ein homocyclisches oder heterocyclisches Polymeres verwendet wird.

6. Verfahren nach Anspruch 4, dadurch gekennzeichnet, daß als hochtemperaturbeständiges Polymeres ein Leiterpolymeres verwendet wird.

7. Verfahren nach einem der Ansprüche 1 bis 6, dadurch gekennzeichnet, daß Fasern oder Garne mit einem hohen Elastizitätsmodul verwendet werden.

8. Verfahren nach einem der Ansprüche 1 bis 7, dadurch gekennzeichnet, daß zusätzlich anorganische Fasern oder Garne eingewebt werden.

9. Verfahren nach einem der Ansprüche 1 bis 8, dadurch gekennzeichnet, daß Fasern mit einem Durchmesser von 1 bis 1000 μm verwendet werden.

10. Verfahren nach einem der Ansprüche 1 bis 9, dadurch gekennzeichnet, daß Garne mit einer Feinheit zwischen 10 dtex und 2200 dtex verwendet werden.

11. Verfahren nach einem der Ansprüche 1 bis 10, dadurch gekennzeichnet, daß diese Temperaturnachbehandlung des Gewebes bei Temperaturen oberhalb der Glastemperatur $T_G$ des amorphen Materials des oder der Polymeren durchgeführt wird.

12. Verfahren nach einem der Ansprüche 1 bis 11, dadurch gekennzeichnet, daß das Doppelgewebe zunächst bei Temperaturen unterhalb der Glastemperatur $T_G$ des amorphen Materials des oder der Polymeren vorgetempert wird.

13. Verfahren nach einem der Ansprüche 1 bis 12, dadurch gekennzeichnet, daß das Doppelgewebe vor der Temperaturnachbehandlung in Längs- und/oder Querrichtung verstreckt wird und daß dann das Gewebe während der Temperaturnachbehandlung schrumpfen gelassen wird.

14. Verfahren nach einem der Ansprüche 1 bis 13, dadurch gekennzeichnet, daß das Doppelgewebe nach der Temperaturnachbehandlung imprägniert wird.

15. Verfahren nach einem der Ansprüche 1 bis 14, dadurch gekennzeichnet, daß das Doppelgewebe nach dem Vortempern oder der Temperaturnachbehandlung in Platten geschnitten wird.

16. Verfahren nach einem der Ansprüche 1 bis 15, dadurch gekennzeichnet, daß das Doppelgewebe nach dem Vortempern in Formteile unter Temperatureinwirkung oberhalb des Glaspunktes $T_G$ gepreßt wird.